Europäisches Patentamt

European Patent Office

Office européen des brevets

(11) Publication number: **0 113 980**

**B1**

# EUROPEAN PATENT SPECIFICATION

(45) Date of publication of patent specification: **22.07.87**

(51) Int. Cl.⁴: **G 11 B 5/39**

(21) Application number: **83307648.2**

(22) Date of filing: **15.12.83**

(54) **Magnetic transducer heads utilising magnetoresistance effect.**

(30) Priority: **16.12.82 JP 220744/82**

(43) Date of publication of application:
**25.07.84 Bulletin 84/30**

(45) Publication of the grant of the patent:
**22.07.87 Bulletin 87/30**

(84) Designated Contracting States:
**DE FR GB NL**

(56) References cited:
**EP-A-0 081 240**
**AT-B- 357 789**
**DE-A-2 632 371**
**GB-A-2 091 025**
**US-A-4 277 808**

(73) Proprietor: **SONY CORPORATION**
**7-35 Kitashinagawa 6-Chome Shinagawa-ku Tokyo 141 (JP)**

(72) Inventor: **Imakoshi, Shigeyoshi**
**c/o Sony Corporation 7-35 Kitashinagawa 6-chome**
**Shinagawa-ku Tokyo (JP)**
Inventor: **Souda, Yutaka**
**c/o Sony Corporation 7-35 Kitashinagawa 6-chome**
**Shinagawa-ku Tokyo (JP)**
Inventor: **Suyama, Hideo**
**c/o Sony Corporation 7-35 Kitashinagawa 6-chome**
**Shinagawa-ku Tokyo (JP)**
Inventor: **Iida, Yasuhiro**
**c/o Sony Corporation 7-35 Kitashinagawa 6-chome**
**Shinagawa-ku Tokyo (JP)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to magnetic transducer heads utilising magnetoresistance effect.

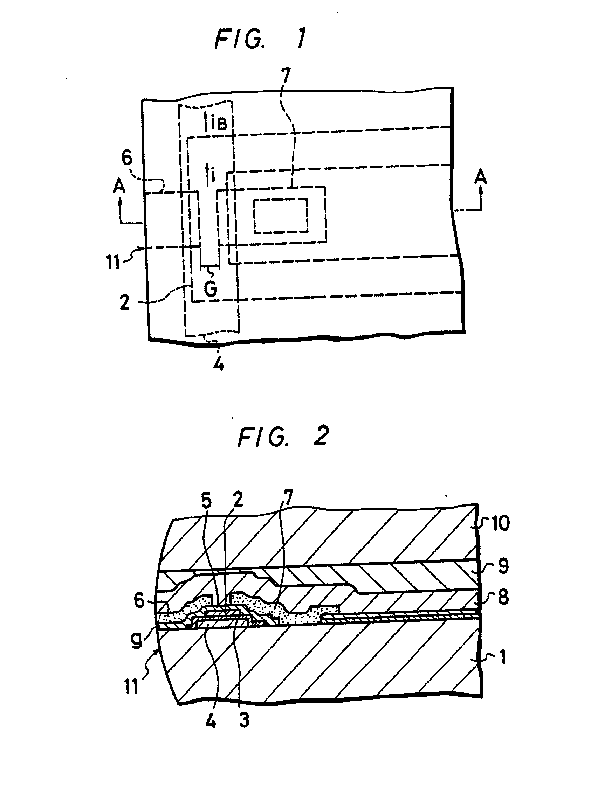

A proposed magnetoresistance (hereinafter abbreviated to "MR") effect type magnetic transducer head, in particular a so-called rear type magnetic transducer head in which an MR effect element thereof is placed at a position rearward of a contact surface of the head with a magnetic recording medium, is shown in Figures 1 and 2 of the accompanying drawings, in which Figure 1 is a schematic enlarged plan view of a main part of the transducer head and Figure 2 is a schematic enlarged cross-sectional view taken along a line A—A in Figure 1. The illustrated transducer head comprises an insulating magnetic substrate 1 made of, for example, ferrite containing Ni-Zn, on which is deposited a band-shaped MR effect element 2 made of, for example, Ni-Co alloy film or the like and having a magnetoresistance effect. A band-shaped conductor film or layer 4 is deposited on the substrate 1, below the MR element 2, with an insulating layer made of $SiO_2$ or the like between the film 4 and element 2. The band-shaped conductor film 4 forms a current path for applying a bias magnetic field by, for example, electromagnetic induction through the insulating layer 3 to the MR element 2. A pair of magnetic layers 6 and 7 made of, for example, alloy containing Ni-Fe or the like, are deposited on the MR element 2 with an insulating layer 5 being disposed between the layers 6 and 7 and the element 2. The magnetic layers 6 and 7 extend in a direction across the MR effect element 2 and are in face to face opposition on the MR effect element 2 so that there is a predetermined spacing G between them. An outer end portion of the magnetic layer 6 opposes the substrate 1, through at least one of the insulating layers 3 and 5, thus forming an operating magnetic gap $g$, while an outer or rear end portion of the other magnetic layer 7 directly contacts the substrate 1 through windows formed through the insulating layers 3 and 5. The conductor film or layer 4, the MR effect element 2 and the magnetic layers 6 and 7 are coated with a non-magnetic protective layer 8 on which a protective substrate 10 is bonded by means of an adhesive layer 9. A contact surface 11 for contact with a magnetic recording medium is formed over both the substrates 1 and 10 and the magnetic gap $g$ faces the contact surface 11. A magnetic path or circuit which includes the magnetic gap $g$ and the MR effect element 2, namely a magnetic path formed by the magnetic substrate 1—the magnetic gap $g$—the magnetic layer 6—the MR effect element 2—the magnetic layer 7—the magnetic substrate 1, is thus formed. The portion of the MR element 2 corresponding to the spacing $G$ between the magnetic layers 6 and 7 becomes an effective operating portion and a magnetic anisotropic direction thereof, namely an axis of easy magnetisation, is selected to be the longitudinal direction thereof.

With the above-described configuration, when a predetermined bias magnetic field, generated by a current $i_B$ flowing through the conductor film 4, is applied to the MR effect element 2 and a detection current i flows through the MR effect element 2 in its longitudinal direction, an electrical signal, namely an output signal due to change of the resistance in the MR effect element 2 caused by applying a magnetic flux of a magnetic signal recorded on a magnetic recording medium which is in contact with or opposed to the magnetic gap $g$, is produced between the ends of the MR effect element 2.

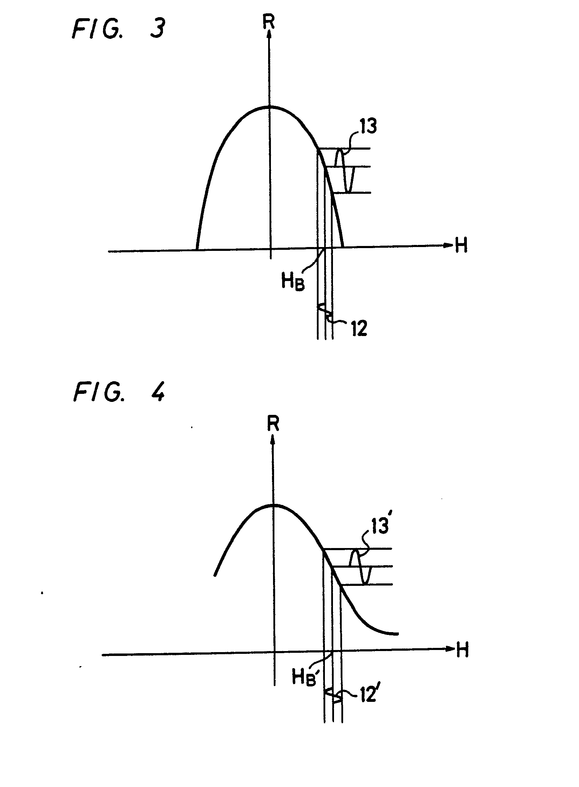

Such an MR effect type magnetic transducer head, in particular the rear type magnetic transducer head in which the magnetic material members (the magnetic layers 6 and 7) are mounted close to both side end edges of the MR effect element 2, has a nonlinear MR characteristic. This is because, in a magnetic transducer head of this kind, the magnetic field (H) versus resistance (R) characteristic of the MR effect element 2 adopts the form of a quadratic curve as shown in Figure 3. Accordingly, if, as shown in Figure 3, a magnetic signal $H_s$ indicated by reference numeral 12 is applied to the MR effect element 2 with a bias magnetic field $H_B$ applied to the MR effect element 2, the output signal 13 provided by the change of the resistance in the MR effect element 2 is distorted. In this connection, the MR characteristic when the magnetic material members are not close to the MR effect element has an extended skirt portion shown in Figure 4. Since the characteristic includes a portion having superior linearity, with a predetermined bias magnetic field $H_B'$ and a magnetic signal 12' it is possible to obtain an output signal 13' which has almost no distortion and is of superior symmetry. This is due to the influence of a demagnetising field generated at both sides of the MR effect element 2. In the magnetic transducer head such as that of the rear type configuration as shown in Figures 1 and 2, in which the magnetic layers 6 and 7 which form the magnetic path across the MR effect element 2 are placed close to both side end edges of the MR effect element 2, substantially no such demagnetising field is generated and the influence of such demagnetising field upon the MR characteristic is small so that the quadratic curve characteristic shown in Figure 3 is obtained.

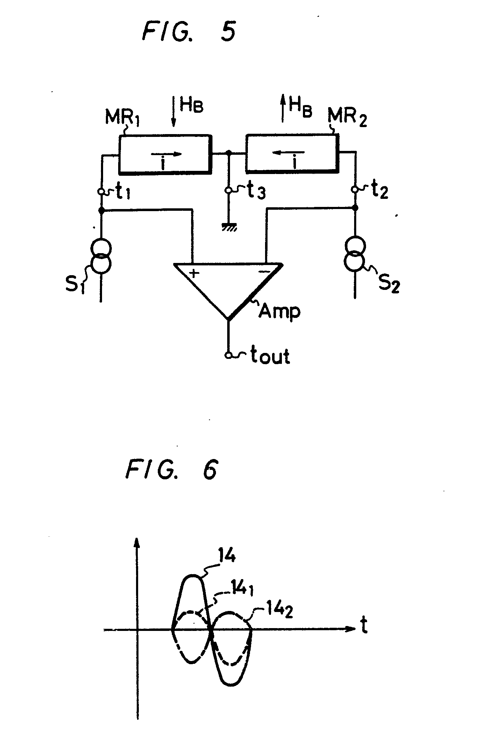

A magnetic transducer head utilising MR effect, which can remove the nonlinear component of the MR characteristic of the MR effect element, can be obtained by arranging MR effect elements in a differential type configuration. As shown in Figure 5, such a differential type MR magnetic transducer head comprises two MR effect elements $MR_1$ and $MR_2$, each having an anisotropic direction $H_K$ extending in the longitudinal direction thereof. The respective ends of the elements $MR_1$ and $MR_2$ adjacent or opposed to one another are connected to a common terminal $t_3$ and the other respective ends are led out to terminals $t_1$ and $t_2$. The terminals $t_1$

and $t_2$ are connected to respective independent constant current sources $S_1$ and $S_2$ and also are connected to input terminals of a differential amplifier Amp. The common terminal $t_3$ led out from the connection point between the MR elements $MR_1$ and $MR_2$ is supplied with a predetermined potential, for example ground potential. The MR effect elements $MR_1$ and $MR_2$ are respectively supplied with constant currents i in directions opposite to one another, and also are supplied with bias magnetic fields $H_B$ which are in directions perpendicular to the direction of flow of the constant currents i and opposite to one another. The MR effect elements $MR_1$ and $MR_2$ are supplied with a common signal magnetic field from the magnetic recording medium (not shown) and output signals $14_1$ and $14_2$ of opposite polarity, as shown in Figure 6, are derived from the MR effect elements $MR_1$ and $MR_2$ and supplied to the amplifier Amp so that, at an output terminal $t_{out}$ of the differential amplifier Amp, there appears a signal 14, having symmetry in positive and negative regions, provided by combining these signals. That is to say, the nonlinear components are cancelled out.

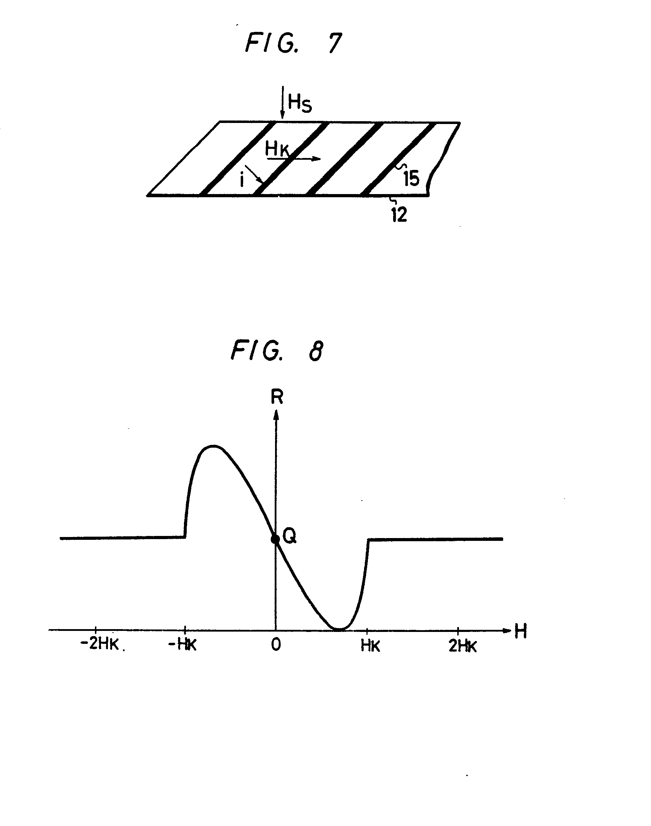

Another MR magnetic transducer head in which the nonlinear component of the magnetic characteristic thereof can be improved is a so-called "barber pole" type MR magnetic transducer head in which, as shown, for example, in Figure 7, the anisotropic direction, namely the axis of easy magnetization $H_K$, extends in the longitudinal direction of an MR effect element 12 and band-shaped conductor thin films 15 made of, for example, Au, are formed thereon at an angle of 45° relative to the axis of easy magnetization thereof and with a predetermined spacing therebetween. Since the Au conductor films 15 are each small in resistance value, the Au conductor films 15 become the same in potential. Current flows from an Au conductor film 15 to the adjacent Au conductor film 15 over the shortest distance so that the direction along which the detection current i flows is at 45° to the axis of easy magnetization $H_K$. The MR characteristic in these circumstances is as shown in Figure 8. Accordingly, when no bias magnetic field is taken at a central point Q of a portion which exhibits linearity, a linear characteristic can be obtained.

The above-described MR magnetic transducer head of differential type construction is subject to the disadvantage that its construction is complicated. The above-described MR magnetic transducer head of barber pole type construction is subject to the disadvantage that, when it is intended that the MR effect element 12 be small in size, the spacing between the adjacent Au conductor films 15 must be narrowed and the substantial resistance of the MR element therefore becomes small, thus making handling of the output signal difficult.

Published Japanese Patent Application JP—A—51—23125 discloses a magnetic transducer head corresponding to that shown in Figures 1 and 2. More specifically, JP—A—51—23125 discloses a magnetic transducer head utilising magnetoresistance effect, comprising a magnetic core and a magnetoresistance effect element, which form a closed magnetic circuit having a magnetic gap which can pick up magnetic flux from a signal magnetic field of a recorded magnetic medium, the transducer head being so arranged that the signal magnetic field can be detected by causing a detection current to flow in the longitudinal direction of the magnetoresistance effect element, and means for applying a predetermined bias magnetic field to the magnetoresistance effect element.

US Patent US—A—4 277 808 discloses a magnetic transducer head utilising magnetoresistance effect, comprising at least one magnetoresistance effect element which can pick up magnetic flux from a signal magnetic field of a recorded magnetic medium, the transducer head being so arranged that the signal magnetic field is perpendicular to a longitudinal direction of the magnetoresistance element and can be detected by causing a detection current to flow in the longitudinal direction of the magnetoresistance effect element, and means for applying a predetermined bias magnetic field to the magnetoresistance effect element. Different examples of such a magnetic transducer head disclosed in US—A—4 277 808 are all of a construction in which the magnetoresistive element is subjected to the signal magnetic field directly. However, mention is made of the possibility of disposing the magnetoresistance element within the magnetic path of a core made of soft magnetic material for the element to be applied with the signal magnetic field indirectly.

According to the present invention there is provided a magnetic transducer head utilising magnetoresistance effect, comprising at least one magnetic core and at least one magnetoresistance effect element, which form a closed magnetic circuit having a magnetic gap which can pick up magnetic flux from a signal magnetic field of a recorded magnetic medium, the transducer head being so arranged that the signal magnetic field is perpendicular to a longitudinal direction of the magnetoresistance effect element and can be detected by causing a detection current to flow in the longitudinal direction of the magnetoresistance effect element, and means for applying a predetermined bias magnetic field to the magnetoresistance effect element, wherein an angle ($\varphi$) between an anisotropic direction of the magnetoresistance effect element and the direction of the signal magnetic field is selected so as to satisfy the condition that $50° \leqslant \varphi \leqslant 85°$.

A preferred embodiment of the present invention described hereinbelow provides an MR effect type magnetic transducer head which can remove or at least alleviate the above-mentioned disadvantages, which has an MR characteristic of excellent linearity, which does not have a complicated construction and does not require a complex manufacturing process, and which permits the MR effect element to be small in size if required.

The invention will now be further described, by way of illustrative and non-limiting example, with reference to the accompanying drawings, in which like references designate like elements and parts throughout, and in which:

Figure 1 is a schematic enlarged plan view of a main part of a previously proposed MR effect type magnetic transducer head;

Figure 2 is a cross-sectional view of the transducer head of Figure 1 taken along a line A—A in Figure 1;

Figures 3 and 4 are respective graphs showing characteristics of the magnetic transducer head shown in Figures 1 and 2;

Figure 5 shows diagrammatically an MR effect type magnetic transducer head of differential type;

Figure 6 is a graph useful for showing a characteristic of the transducer head of Figure 5;

Figure 7 is a schematic view of a previously proposed MR effect type magnetic transducer head of barber pole type;

Figure 8 is a graph showing the MR characteristic of the transducer head of Figure 7;

Figure 9 is a schematic enlarged plan view of a main part of an MR effect type magnetic transducer head embodying the present invention;

Figure 10 is a cross-sectional view of the transducer head of Figure 9 taken along a line A—A in Figure 9;

Figure 11 is a diagram used to explain the construction of an MR effect element of the transducer head shown in Figures 9 and 10; and

Figures 12 to 18 are respective graphs showing MR characteristics of the MR effect element of Figure 11.

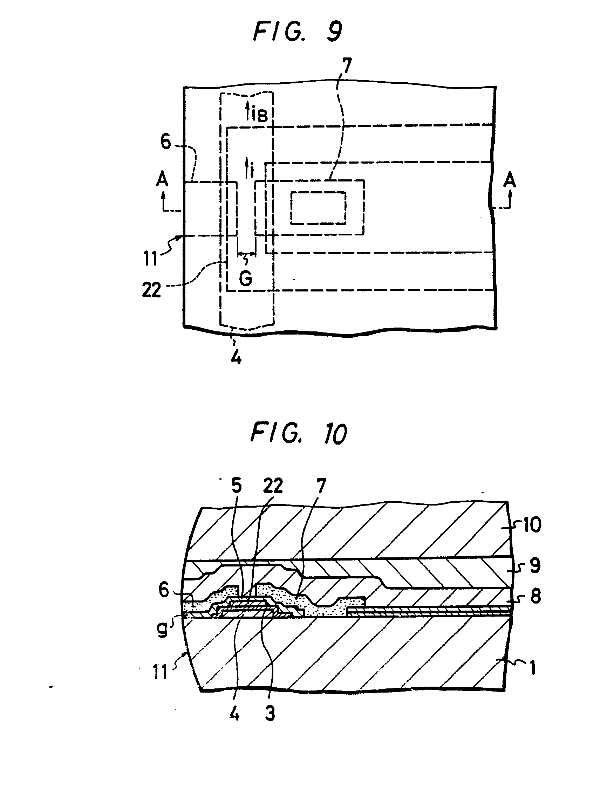

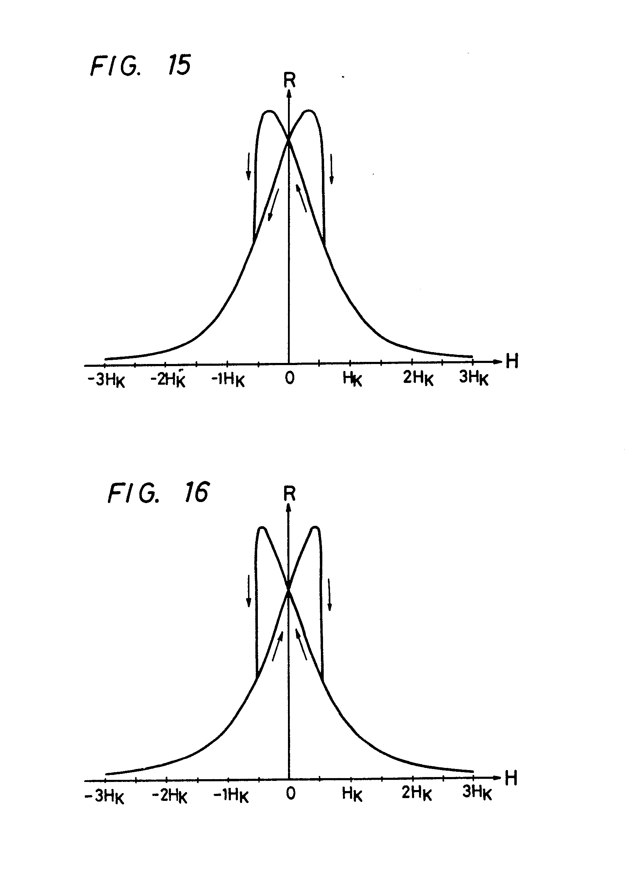

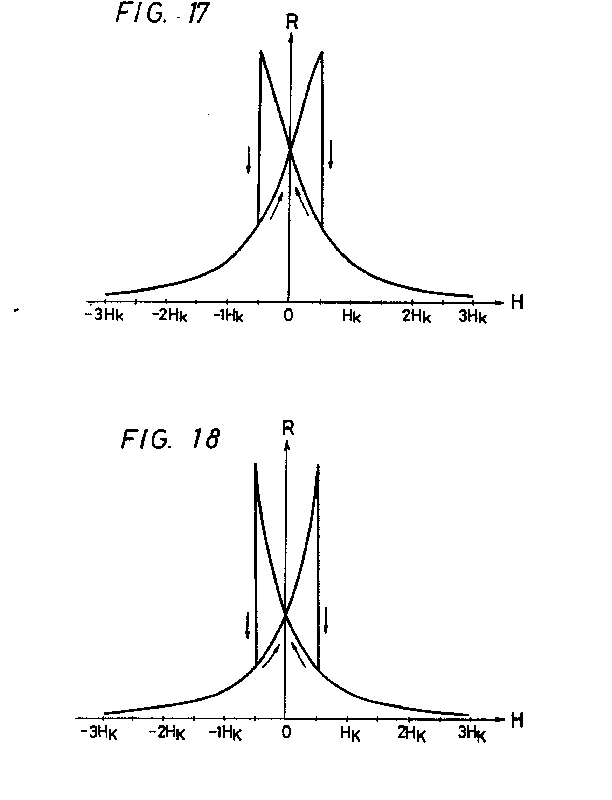

An MR effect type magnetic transducer head embodying the present invention will now be described in detail with reference to Figures 9 to 18 of the accompanying drawings.

Figure 9 is a schematic enlarged plan view of a main part of an MR effect type magnetic transducer head embodying the present invention and Figure 10 is a cross-sectional view taken along a line A—A in Figure 9. The magnetic transducer head shown in Figures 9 and 10 can be generally constructed in similar manner to that shown in Figures 1 and 2, but some of it, in particular the MR element thereof, is constructed in a different manner. In Figures 9 and 10, parts corresponding to parts shown in Figures 1 and 2 are designated by the same references and will not further be described.

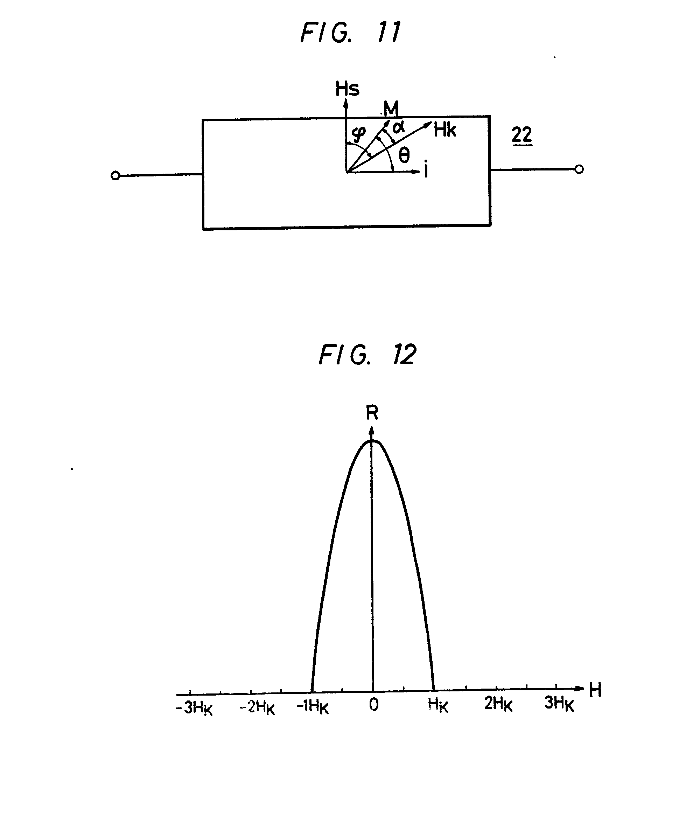

Instead of having the MR element 2 shown in Figures 1 and 2, the transducer head of Figures 9 and 10 has an MR element 22 having a special anisotropic direction $H_K$. As shown in Figure 11, the MR element 22 is made of a thin film of alloy containing, for example Ni-Co, in the same way as mentioned above. In this case, a detection current $i$ is caused to flow in the longitudinal direction thereof, while a signal magnetic field $H_S$ is applied in a direction perpendicular to the direction of flow of the detection current $i$. The angle $\varphi$ between the axis of easy magnetisation of the element 22, namely the anisotropic direction $H_K$, and the direction of the signal magnetic field $H_S$, is selected so as to satisfy the condition $50° \leqslant \varphi \leqslant 85°$.

As is known well, the anisotropic direction or the axis of easy magnetisation of the MR element 22 can be selected at will in dependence on the direction of the vacuum evaporation, method of thermal treatment and the like. Therefore, it is possible voluntarily to select the anisotropic direction to have a predetermined angle relative to the longitudinal direction of the MR element 22, namely the direction of flow of the detection current.

Figure 12 is a graph showing the MR characteristic of an MR effect having the construction shown in Figure 11 in a case in which the angle between the anisotropic direction and the direction of the signal magnetic field is selected to be 90°. In this case, that is when the angle $\varphi = 90°$, the MR characteristic of the MR effect element is in the form of a quadratic curve.

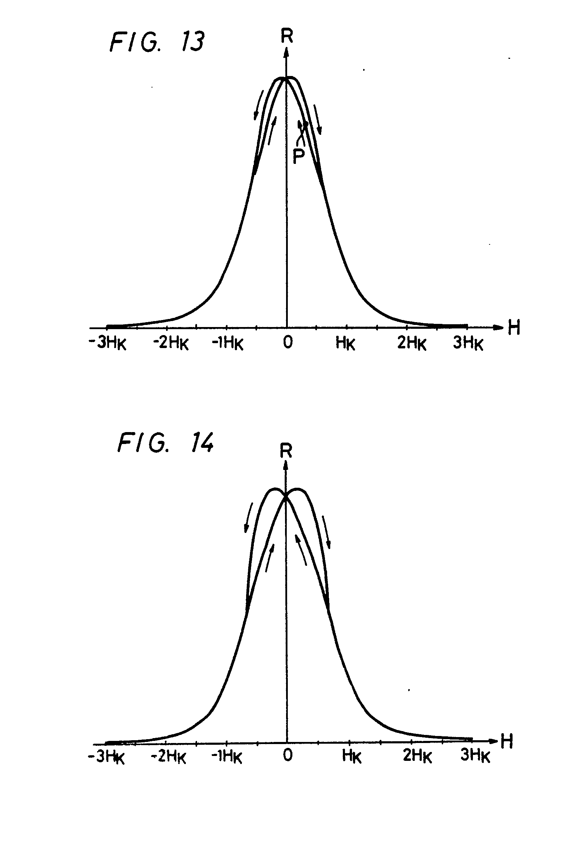

Figure 13 is a graph showing the MR characteristic of the MR element 22 when the angle $\varphi$ is selected to be 85°. In this case, although the MR characteristic thereof adopts a form in which the magnetisation is reversed twice due to hysteresis effect, each characteristic curve has excellent linearity. Accordingly, in this case, when the bias magnetic field applied to the MR effect element is determined to be of such an magnitude as indicated by a point P in, for example, on characteristic curve in the graph of Figure 13, and the signal magnetic field is applied thereto in a range which will not cause the magnetisation to be reversed, it is possible to derive an output having excellent linearity.

Figures 14 to 18 are graphs showing similar MR characteristics of the MR effect element 22 when the angle $\varphi$ is selected to be 80°, 70°, 60°, 50° and 40°, respectively. As is clear from the graphs of Figures 12 to 18, a magnetic transducer head in which the condition $50° \leqslant \varphi \leqslant 85°$ is satisfied has a portion of excellent linearity in the MR characteristic curve. The reason why such a magnetic transducer has an MR characteristic of excellent linearity is believed to be proved by the following analysis. If, as shown in Figure 11, the angle between the direction of magnetisation M and the direction of flow of the detection current $i$ is taken as $\theta$ and the angle between the direction of magnetisation M and the anisotropic direction $H_K$ is taken as $\alpha$, the direction of magnetisation M becomes stable in a direction in which a sum between the anisotropy energy and the potential energy of the system, given by the following Equation (1), becomes a minimum:

$$E = Ku \sin^2\alpha - HM \cos(\varphi - \alpha) \qquad (1)$$

where Ku is the anisotropy constant. The condition under which the above sum becomes a minimum is obtained when

$$\frac{\partial E}{\partial \alpha}=0 \qquad (2)$$

$$\frac{\partial^2 E}{\partial \alpha^2}>0 \qquad (3)$$

Calculating Equation (2) gives:

$$\frac{\partial E}{\partial \alpha}=Ku \sin 2-HM \sin (\varphi-\alpha) \qquad (4)$$

$$Ku=\tfrac{1}{2} H_K M \qquad (5)$$

Substituting Equation (5) into Equation (4) gives:

$$\frac{\partial E}{\partial \alpha}=MH_K (\tfrac{1}{2} \sin 2\alpha-\frac{H}{H_K}\sin (\varphi-\alpha))=0 \qquad (6)$$

If Equation (3) is calculated in the same manner as above, the condition

$$\frac{\partial E^2}{\partial \alpha^2}=2Ku \cos 2\alpha+HM \cos (\varphi-\alpha)$$

$$=H_K \cdot \overline{M} \quad (\cos 2\alpha+\frac{H}{H_K}\cos (\varphi-\alpha))>0 \qquad (7)$$

must be satisfied. Namely, with a value of the angle θ which can satisfy Equations (6) and (7), the direction of the magnetisation M becomes stable. This can be solved by the calculation regarding the angle φ. Then, a y component of the magnetisation M thus calculated forms a hysteresis loop of a so-called uniaxial anisotropic film.

Furthermore, the resistance value ρ of the MR element is expressed as

$$\rho=\rho_0+\Delta\rho \cos^2\theta \qquad (8)$$

If the angle θ calculated from the conditions given by Equations (6) and (7) is substituted into Equation (8), an MR characteristic which is coincident with the characteristics shown in Figures 12 to 18 can be obtained.

The linearity of the MR characteristic is poor at φ=90°, excellent at φ=85°, of a downward convex shape at φ=40° and excellent at φ=50°.

Thus, as explained above, the magnetic transducer head can have a portion of excellent linearity in its MR characteristic by suitably selecting the angle between the anisotropic direction and the direction of the signal magnetic field. Accordingly, such a magnetic transducer head can avoid or alleviate the disadvantages of complex configuration or complex manufacturing process which are inherent in the above-described magnetic transducer heads of the differential type or barber pole type. Furthermore, it is possible to obviate features which are obstacles to the MR element being formed so as to be of compact size. Thus, the present transducer head can bring about a great advantage in practical use.

**Claim**

A magnetic transducer heat utilising magnetoresistance effect, comprising at least one magnetic core and at least one magnetoresistance effect element (22) which form a closed magnetic circuit having a magnetic gap (g) which can pick up magnetic flux from a signal magnetic field ($H_s$) of a recorded magnetic medium, the transducer head being so arranged that the signal magnetic field ($H_s$) is perpendicular to a longitudinal direction of the magnetoresistance effect element (22) and can be detected by causing a detection current (i) to flow in the longitudinal direction of the magnetoresistance effect element (22), and means (4) for applying a predetermined bias magnetic field to the magnetoresistance effect element (22), wherein an angle (φ) between an anisotropic direction ($H_K$) of the magnetoresistance effect element (22) and the direction of the signal magnetic field is selected so as to satisfy the condition that 50°≤φ≤85°.

**Patentanspruch**

Magnetischer Wandlerkopf, welcher den magnetoresistiven Effekt verwendet, mit zumindest einem Magnetkern und zumindest einem Magnetoresistenzeffekt - Element (22), die einen geschlossenen magnetischen Kreis bilden, der einen Magnetlufspalt (g) hat, welcher einen magnetischen Fluß von einem Signalmagnetfeld ($H_s$) eines beispielten magnetischen Mediums aufnehmen kann, wobei der Wandlerkopf derart angeordnet ist, daß das Signalmagnetfeld ($H_s$) senkrecht zu einer Längsrichtung des Magnetoresistenzeffekt - Elements (22) orientiert ist und durch Verursachen eines in Längsrichtung des Magnetoresistenzeffekt - Elements (22) fließenden Erfassungsstroms (i) erfaßt werden kann, und einem Mittel (4) zum Anlegen eines vorbestimmten Vormagnetisierungsfeldes an das Magnetoresistenzeffekt - Element (22), wobei ein Winkel (φ) zwischen einer anisotropen Richtung ($H_K$) des Magnetoresistenzeffekt - Elements (22) und der Richtung des Signalmagnetfeldes so gewählt ist, daß die Bedingung 50°≤φ≤85° erfüllt ist.

**Revendication**

Tête de transducteur magnétique utilisant un effet de magnétorésistance, comportant au moins un noyau magnétique et au moins un élément (22) à effet de magnétorésistance qui forment un circuit magnétique fermé avec un entrefer magnétique (g) qui peut capter un flux magnétique d'un champ magnétique du signal (H$_S$) d'un support magnétique enregistré, la tête magnétique étant agencée de manière que le champ magnétique du signal (H$_S$) soit perpendiculaire à la direction longitudinale de l'élément (22) à effet de magnétorésistance et puisse être détecté en faisant circuler un courant de détection (i) dans la direction longitudinale de l'élément (22) à effet de magnétorésistance, et un dispositif (4) appliquant un champ magnétique de polarisation prédéterminée à l'élément (22) à effet de magnétorésistance, dans lequel l'angle (φ) entre une direction anisotrope (H$_K$) de l'élément (22) à effet de magnétorésistance et la direction du champ magnétique du signal est choisi de manière à satisfaire la condition que (50°≤φ≤85°).

## FIG. 1

## FIG. 2

FIG. 3

FIG. 4

## FIG. 5

## FIG. 6

*FIG. 7*

*FIG. 8*

## FIG. 9

## FIG. 10

## FIG. 11

## FIG. 12

*FIG. 13*

*FIG. 14*

FIG. 15

FIG. 16

FIG. 17

FIG. 18